# EUROPEAN PATENT APPLICATION

(11) **EP 4 145 298 A1**
(43) Date of publication of application: **08.03.2023**
(21) Application number: 22197040.3
(22) Date of filing: 22.09.2022
(51) Int. Cl.: G06F 16/11, G06F 11/14

(54) **METHOD AND APPARATUS FOR SNAPSHOTTING METADATA**

(30) Priority: 23.09.2021 CN 202111114341
(71) Applicant: BEIJING BAIDU NETCOM SCIENCE TECHNOLOGY CO., LTD., Beijing 100085 (CN)
(72) Inventor: DENG, Xin, Beijing, 100085 (CN); CAO, Biao, Beijing, 100085 (CN); LIU, Yang, Beijing, 100085 (CN)
(74) Representative: Maiwald GmbH

(57) **Abstract**

With the method for snapshotting metadata, in response to reaching a current snapshot moment, a second basic version number of a binary search tree in a database at the current snapshot moment is generated according to a first basic version number at a previous snapshot moment; during a process from the current snapshot moment to a next snapshot moment, whenever metadata in the database is updated, the binary search tree is updated according to the updated metadata, and an updated version number of the binary search tree after each update is generated according to the second basic version number; and in response to reaching the next snapshot moment, a snapshot operation is performed on binary search trees corresponding to all version numbers generated between the current snapshot moment and the next snapshot moment to generate snapshot information of the current snapshot moment.

## Description

### TECHNICAL FIELD

The disclosure relates to the field of cloud computing technologies, especially to the field of cloud storage technologies, and in particular to a method and an apparatus for snapshotting metadata.

### BACKGROUND

In the related art, when taking a snapshot of a metadata management node in a database, it generally employs a manner of storing state data into a memory, directly adding a read-write lock to copy data out, and generating a snapshot file in asynchronous data persistence. However, when the amount of snapshot data is large, it is easy for this manner to cause the memory blockage and to prolong the time to copy data into the memory.

### SUMMARY

The disclosure provides a method, an apparatus and a device for snapshotting metadata, and a storage medium.

According to an aspect of the disclosure, a method for snapshotting metadata is provided. In response to reaching a current snapshot moment, a second basic version number of a binary search tree in a database at the current snapshot moment is generated according to a first basic version number of the binary search tree in the database at a previous snapshot moment; during a process from the current snapshot moment to a next snapshot moment, whenever metadata in the database is updated, the binary search tree is updated according to the updated metadata, and an updated version number of the binary search tree after each update is generated according to the second basic version number; and in response to reaching the next snapshot moment, a snapshot operation is performed on binary search trees corresponding to all version numbers generated between the current snapshot moment and the next snapshot moment to generate snapshot information of the current snapshot moment.

The method for snapshotting metadata provided in the disclosure adopts the binary search tree of multi-version concurrency control, which can modify the data without affecting the data of the previous version, ensure the accuracy and consistency of the data, and acquire the snapshot data fast and efficiently without the user's perception.

According to another aspect of the disclosure, an apparatus for snapshotting metadata is provided. The apparatus includes: an acquisition module, configured to, in response to reaching a current snapshot moment, generate a second basic version number of a binary search tree in a database at the current snapshot moment according to a first basic version number of the binary search tree in the database at a previous snapshot moment; an update module, configured to, during a process from the current snapshot moment to a next snapshot moment, whenever metadata in the database is updated, update the binary search tree according to the updated metadata, and generate an updated version number of the binary search tree after each update according to the second basic version number; and an operation module, configured to, in response to reaching the next snapshot moment, perform a snapshot operation on binary search trees corresponding to all version numbers generated between the current snapshot moment and the next snapshot moment to generate snapshot information of the current snapshot moment.

The apparatus for snapshotting metadata provided in the disclosure adopts the binary search tree of multi-version concurrency control, which can modify the data without affecting the data of the previous version, ensure the accuracy and consistency of the data, and acquire the snapshot data fast and efficiently without the user's perception.

According to another aspect of the disclosure, an electronic device is provided. The electronic device includes: at least one processor and a memory communicatively coupled to the at least one processor. The memory is configured to store instructions executable by the at least one processor, and when the instructions are executed by the at least one processor, the at least one processor is enabled to perform the method for snapshotting metadata according to the disclosure.

According to another aspect of the disclosure, a non-transitory computer-readable storage medium having computer instructions stored thereon is provided. The computer instructions are configured to cause a computer to perform the method for snapshotting metadata according to the disclosure.

According to another aspect of the disclosure, a computer program product including computer programs is provided. When the computer programs are executed by a processor, the method for snapshotting metadata according to the disclosure is performed.

It should be understood that the content described in this section is not intended to identify key or important features of embodiments of the disclosure, nor is it intended to limit the scope of the disclosure.

Additional features of the disclosure will be easily understood according to the following description.

### BRIEF DESCRIPTION OF THE DRAWINGS

The drawings are used to better understand the solution and do not constitute a limitation to the disclosure, in which:
FIG. 1 is a flowchart of a method for snapshotting metadata according to an exemplary embodiment of the disclosure.
FIG. 2 (a) is a schematic diagram showing a second basic version number at a current snapshot moment being V2 according to an exemplary embodiment of the disclosure.
FIG. 2 (b) is a schematic diagram showing a version number at a current snapshot moment being V2-1 according to an exemplary embodiment of the disclosure.
FIG. 3 is a flowchart of generating an updated version number for a binary search tree after each update according to an exemplary embodiment of the disclosure.
FIG. 4 is a flowchart of recovering metadata according to target snapshot information according to an exemplary embodiment of the disclosure.
FIG. 5 is a flowchart of updating a binary search tree according to updated metadata according to an exemplary embodiment of the disclosure.
FIG. 6 is a flowchart of a method for snapshotting metadata according to an exemplary embodiment of the disclosure.
FIG. 7 is a block diagram of an apparatus for snapshotting metadata according to an exemplary embodiment of the disclosure.
FIG. 8 is a block diagram of an electronic device according to an exemplary embodiment of the disclosure.

### DETAILED DESCRIPTION

The following describes embodiments of the disclosure with reference to the drawings, which includes various details of embodiments of the disclosure to facilitate understanding and shall be considered merely exemplary. For clarity and conciseness, descriptions of well-known functions and structures are omitted in the following description.

Cloud computing is a type of distributed computing, which refers to decomposing huge data computing processing programs into countless small programs through network "cloud", and processing and analyzing these small programs through a system including multiple servers to acquire results and returning results to users.

Cloud storage is a mode of online storage, which stores data on multiple virtual servers that are usually hosted by a third party, rather than on dedicated servers.

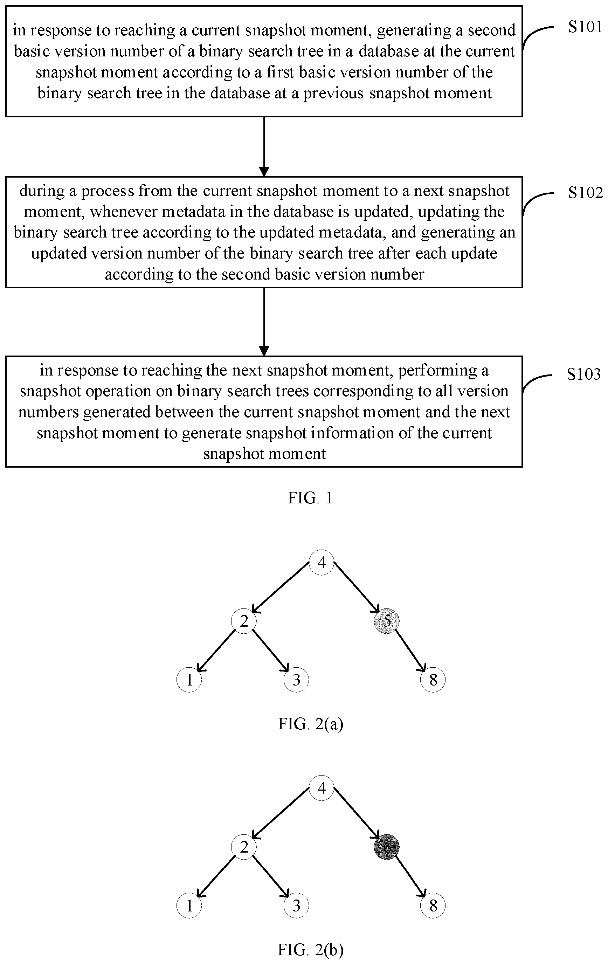

FIG. 1 is a flowchart of a method for snapshotting metadata according to an exemplary embodiment of the disclosure. As shown in FIG. 1, the method includes the following steps.

S101, in response to reaching a current snapshot moment, a second basic version number of a binary search tree in a database at the current snapshot moment is generated according to a first basic version number of the binary search tree in the database at a previous snapshot moment.

In some embodiments of the disclosure, the binary search tree supporting multi-version concurrency control (MVCC) is used to store metadata. MVCC is a manner of multi-version concurrency control, which realizes concurrency access to the database in the database management system, and realizes transaction memory in the programming language. The binary search tree is organized by a binary tree, which can be represented by a linked list data structure, in which each node in the tree is an object and generally includes data content and a pointer property to a child or parent. If a child node or parent node does not exist, its pointer property value is null.

The version number of the binary search tree in the database at the previous snapshot moment is used as the first basic version number. When the snapshot moment arrives, the second basic version number at the current snapshot moment is generated according to the first basic version number of the binary search tree in the database at the previous snapshot moment. For example, if the first basic version number of the binary search tree in the database at the previous snapshot moment is marked as V1, the second basic version number at the current snapshot moment is marked as V2.

Optionally, the moment when the snapshot arrives may be a preset timing or may be a manually initiated snapshot moment.

S102, during a process from the current snapshot moment to a next snapshot moment, whenever metadata in the database is updated, the binary search tree is updated according to the updated metadata, and an updated version number of the binary search tree after each update is generated according to the second basic version number.

In some embodiments of the disclosure, a node of the binary search tree is metadata. Metadata, also known as intermediary data and relay data, is data for describing data and information for describing data attributes, and is used to support functions such as indicating storage location, historical data, resource searching, and file recording.

In the range from the current snapshot moment to the next snapshot moment, if the metadata in the database is updated, the binary search tree is updated according to the updated metadata. Optionally, the update may be adding metadata, modifying metadata, deleting metadata, and the like.

After each time the binary search tree is updated, correspondingly, according to the second basic version number at the current snapshot moment, the version number corresponding to the binary search tree is also updated. For example, FIG. 2 is a schematic diagram of the second basic version number V2 at the current snapshot moment. As shown in FIG. 2(a), the binary search tree has 1, 2, 3, 4, 5, and 8 nodes in total. In the range from the current snapshot moment to the next snapshot moment, if the metadata in node 5 in the database is modified, the binary search tree is updated. The modified node is represented by node 6, and the updated binary search tree is shown in FIG. 2 (b), and the updated binary search tree is denoted as V2-1; if the database modifies metadata again within the range from the current snapshot moment to the next snapshot moment, the binary search tree is updated and the updated binary search tree is denoted subsequently as V2-2.

Similarly, the second basic version number at the current snapshot moment is V3. If metadata is added to the database within the range from the current snapshot moment to the next snapshot moment, the binary search tree is updated, and the updated binary search tree is denoted as V3-1; if the database modifies metadata within the range from the current snapshot moment to the next snapshot moment, the binary search tree is updated, and the updated binary search tree is denoted as V3-2.

S103, in response to reaching the next snapshot moment, a snapshot operation is performed on binary search trees corresponding to all version numbers generated between the current snapshot moment and the next snapshot moment to generate snapshot information of the current snapshot moment.

For example, the second basic version number at the current snapshot moment is V2, and the basic version number at the next snapshot moment is V3. If the next snapshot moment is reached, the snapshot operation is performed on the binary search trees corresponding to all version numbers generated between the current snapshot moment and the next snapshot moment, that is, the snapshot operation is performed on V2, V2-1, V2-2...V2-N to generate snapshot information corresponding to the current snapshot moment.

Similarly, the second basic version number at the current snapshot moment is V3, and the basic version number at the next snapshot moment is V4. If the next snapshot moment is reached, the snapshot operation is performed on the binary search trees corresponding to all version numbers generated between the current snapshot moment and the next snapshot moment, that is, the snapshot operation is performed on V3, V3-1, V3-2...V3-N to generate snapshot information corresponding to the current snapshot moment.

The snapshot information includes a lot of metadata information, such as metadata information of a group of replicas, metadata information of a replica, and metadata information of a transaction. When the database fails, the state of the database at that time can be recovered according to the metadata information in the snapshot information.

The method for snapshotting metadata is provided in some embodiments of the disclosure. In response to reaching a current snapshot moment, a second basic version number of a binary search tree in a database at the current snapshot moment is generated according to a first basic version number of the binary search tree in the database at a previous snapshot moment; during a process from the current snapshot moment to a next snapshot moment, whenever metadata in the database is updated, the binary search tree is updated according to the updated metadata, and an updated version number of the binary search tree after each update is generated according to the second basic version number; and in response to reaching the next snapshot moment, a snapshot operation is performed on binary search trees corresponding to all version numbers generated between the current snapshot moment and the next snapshot moment to generate snapshot information of the current snapshot moment. This disclosure adopts the binary search tree of MVCC, which can modify the data without affecting the data of the previous version, ensure the accuracy and consistency of the data, and acquire the snapshot data fast and efficiently without the user's perception.

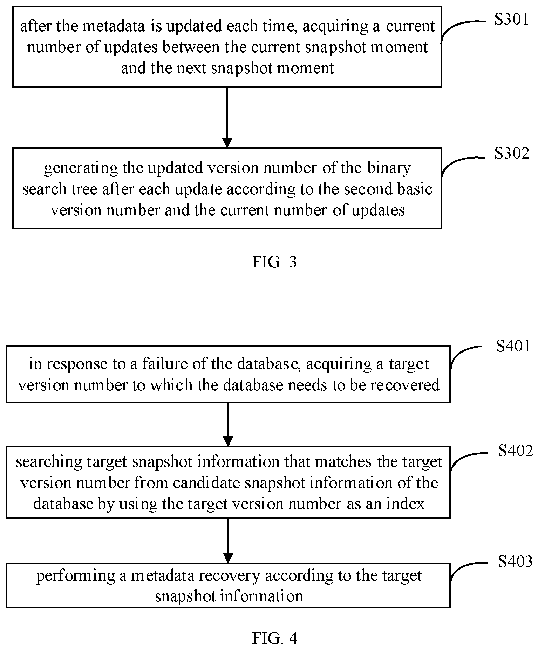

FIG. 3 is a flowchart of generating an updated version number for a binary search tree after each update according to an exemplary embodiment of the disclosure. As shown in FIG. 3, according to the above embodiments, generating the updated version number of the binary search tree after each update according to the second basic version number includes the following steps.

S301, after the metadata is updated each time, a current number of updates between the current snapshot moment and the next snapshot moment is acquired.

Each time the metadata in the database is updated, the current number of updates between the current snapshot moment and the next snapshot moment is acquired. For example, at the current snapshot moment, if the metadata has undergone an adding, this is the first update; if the metadata has undergone a modification, this is the second update; if the metadata has undergone a deletion again, this is the third update, and so on.

S302, the updated version number of the binary search tree after each update is generated according to the second basic version number and the current number of updates.

According to the second basic version number and the current number of updates, the updated version number of the binary search tree after each update is generated. For example, if the second basic version number at the current snapshot moment is V2, and the current number of updates is the third update, the updated version number of the updated binary search tree can be denoted as V2-3; if the current number of updates is the N times of updates, the updated version number of the updated binary search tree can be denoted as V2-N.

Similarly, if the second basic version number at the current snapshot moment is V3, and the current number of updates is the third update, the updated version number of the updated binary search tree can be denoted as V3-3; if the current number of updates is the N times of updates, the updated version number of the updated binary search tree can be denoted as V3-N.

In some embodiment of the disclosure, the updated version number is generated for the binary search tree after each update according to the second basic version number, so that the version number generated after each update is arranged in an orderly manner, so that snapshot data can be quickly and efficiently acquired when the subsequent snapshot is acquired.

FIG. 4 is a flowchart of recovering metadata according to target snapshot information according to an exemplary embodiment of the disclosure. As shown in FIG. 4, according to the above embodiments, after the snapshot information of the current snapshot moment is generated, the following steps are further included.

S401, in response to a failure of the database, a target version number to which the database needs to be recovered is acquired.

If the database fails after the snapshot information at the current snapshot moment is generated, the target version number to which the database needs to be recovered is acquired. For example, if the database fails at version number V2-3, the target version number to which it needs to be recovered is version number V2-3.

S402, target snapshot information that matches the target version number is searched from candidate snapshot information of the database by using the target version number as an index.

All snapshot information acquired for the database is used as candidate snapshot information, and the version number is used as an index. From the candidate snapshot information of the database, the candidate snapshot information that matches the target version number is indexed as the target snapshot information. Continue to take the above-mentioned target version number to be recovered to is version number V2-3 as an example, version number V2-3 is used as an index, and the candidate snapshot information that matches the target version number is searched from the candidate snapshot information of the database, that is V2, V2-1, V2-2, V2-3...V2-N, and V2, V2-1, V2-2, V2-3...V2-N are taken as the target snapshot information.

S403, a metadata recovery is performed according to the target snapshot information.

According to the target snapshot information acquired above, the metadata recovery is performed on the metadata corresponding to the target version number.

Optionally, in order to save the memory, after the snapshot information corresponding to the current snapshot moment is generated, the binary search tree corresponding to the updated version number generated between the current snapshot moment and the next snapshot moment may be deleted, and only the generated snapshot information is retained. For example, after the snapshot operation is performed on V2, V2-1, V2-2...V2-N above, and the snapshot information corresponding to the current snapshot moment is generated, the binary search trees of V2, V2-1, V2-2...V2-N can be deleted.

In some embodiments of the disclosure, when the database fails, the snapshot information can be indexed according to the target version number, and the metadata can be recovered, thereby improving the efficiency of recovering the metadata and shortening the recovering time of the metadata.

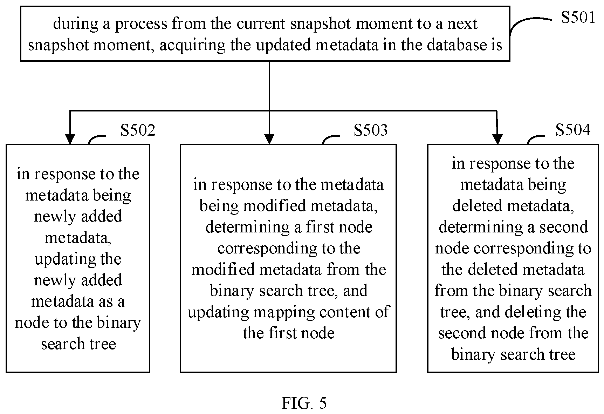

FIG. 5 is a flowchart of updating a binary search tree according to updated metadata according to an exemplary embodiment of the disclosure. As shown in FIG. 5, according to the above-mentioned embodiments, updating the binary search tree according to the updated metadata includes the following steps.

S501, during a process from the current snapshot moment to a next snapshot moment, the updated metadata in the database is acquired.

In the range from the current snapshot moment to the next snapshot moment, if the metadata in the database is updated, the updated metadata in the database is acquired.

S502, in response to the metadata being newly added metadata, the newly added metadata is updated as a node to the binary search tree.

If new metadata is added, the branch direction of the new metadata in the binary search tree is determined according to the key value of the new metadata, and the new metadata is updated as the node in the binary search tree according to the branch direction.

S503, in response to the metadata being modified metadata, a first node corresponding to the modified metadata is determined from the binary search tree, and mapping content of the first node is updated.

If the existing metadata is modified, the node corresponding to the modified metadata is determined from the binary search tree as the first node, and the mapping content of the first node is updated according to the modified metadata.

S504, in response to the metadata being deleted metadata, a second node corresponding to the deleted metadata is determined from the binary search tree, and the second node is deleted from the binary search tree.

If the existing metadata is deleted, the node corresponding to the deleted metadata is determined from the binary search tree as the second node, and the second node is deleted from the binary search tree.

Some embodiments of the disclosure respectively update the binary search tree by enumerating the addition, modification, and deletion of metadata, so that the binary search tree can better reflect changes in metadata, and is more flexible and accurate.

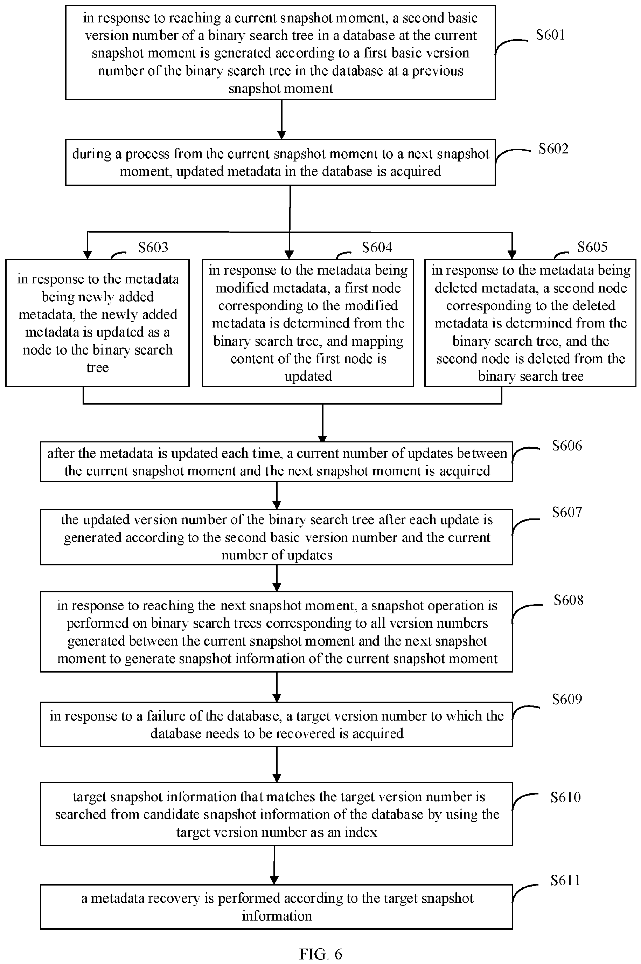

FIG. 6 is a flowchart of a method for snapshotting metadata according to an exemplary embodiment of the disclosure. As shown in FIG. 6, the method includes the following steps.

S601, in response to reaching a current snapshot moment, a second basic version number of a binary search tree in a database at the current snapshot moment is generated according to a first basic version number of the binary search tree in the database at a previous snapshot moment.

S602, during a process from the current snapshot moment to a next snapshot moment, updated metadata in the database is acquired.

S603, in response to the metadata being newly added metadata, the newly added metadata is updated as a node to the binary search tree.

S604, in response to the metadata being modified metadata, a first node corresponding to the modified metadata is determined from the binary search tree, and mapping content of the first node is updated.

S605, in response to the metadata being deleted metadata, a second node corresponding to the deleted metadata is determined from the binary search tree, and the second node is deleted from the binary search tree.

With regard to steps S603 to S605, the above embodiments have been described in detail, and details are not repeated herein.

S606, after the metadata is updated each time, a current number of updates between the current snapshot moment and the next snapshot moment is acquired.

S607, the updated version number of the binary search tree after each update is generated according to the second basic version number and the current number of updates.

S608, in response to reaching the next snapshot moment, a snapshot operation is performed on binary search trees corresponding to all version numbers generated between the current snapshot moment and the next snapshot moment to generate snapshot information of the current snapshot moment.

S609, in response to a failure of the database, a target version number to which the database needs to be recovered is acquired.

S610, target snapshot information that matches the target version number is searched from candidate snapshot information of the database by using the target version number as an index.

S611, a metadata recovery is performed according to the target snapshot information.

With regard to steps S606 to S611, the above-mentioned embodiments have been described in detail, and details are not repeated herein.

The method for snapshotting metadata is provided in some embodiments of the disclosure. In response to reaching a current snapshot moment, a second basic version number of a binary search tree in a database at the current snapshot moment is generated according to a first basic version number of the binary search tree in the database at a previous snapshot moment; during a process from the current snapshot moment to a next snapshot moment, whenever metadata in the database is updated, the binary search tree is updated according to the updated metadata, and an updated version number of the binary search tree after each update is generated according to the second basic version number; and in response to reaching the next snapshot moment, a snapshot operation is performed on binary search trees corresponding to all version numbers generated between the current snapshot moment and the next snapshot moment to generate snapshot information of the current snapshot moment. This disclosure adopts the binary search tree of MVCC, which can modify the data without affecting the data of the previous version, ensure the accuracy and consistency of the data, and acquire the snapshot data fast and efficiently without the user's perception.

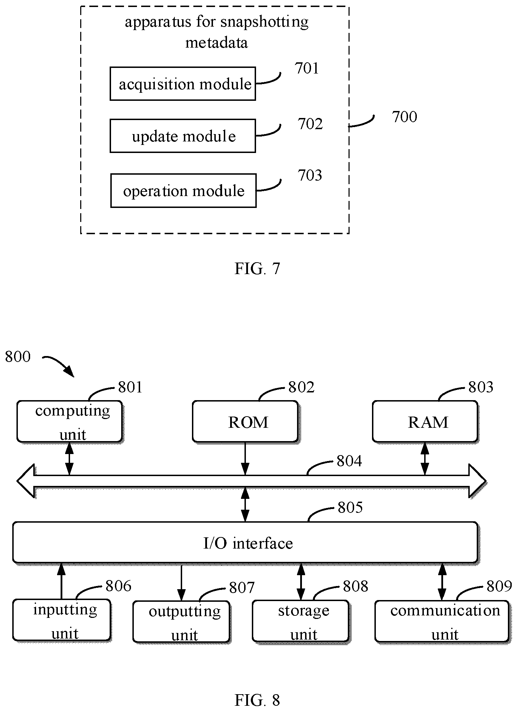

FIG. 7 is a block diagram of an apparatus for snapshotting metadata according to an exemplary embodiment of the disclosure. As shown in FIG. 7, the apparatus 700 includes an acquisition module 701, an update module 702 and an operation module 703.

The acquisition module 701 is configured to, in response to reaching a current snapshot moment, generate a second basic version number of a binary search tree in a database at the current snapshot moment according to a first basic version number of the binary search tree in the database at a previous snapshot moment.

The update module 702 is configured to, during a process from the current snapshot moment to a next snapshot moment, whenever metadata in the database is updated, update the binary search tree according to the updated metadata, and generate an updated version number of the binary search tree after each update according to the second basic version number.

The operation module 703 is configured to, in response to reaching the next snapshot moment, perform a snapshot operation on binary search trees corresponding to all version numbers generated between the current snapshot moment and the next snapshot moment to generate snapshot information of the current snapshot moment.

Further, the update module 702 is further configured to: after the metadata is updated each time, acquire a current number of updates between the current snapshot moment and the next snapshot moment; and generate the updated version number of the binary search tree after each update according to the second basic version number and the current number of updates.

Further, the operation module 703 is further configured to: delete the binary search tree corresponding to the updated version number generated between the current snapshot moment and the next snapshot moment.

Further, the operation module 703 is further configured to: in response to a failure of the database, acquire a target version number to which the database needs to be recovered; search target snapshot information that matches the target version number from candidate snapshot information of the database by using the target version number as an index; and perform a metadata recovery according to the target snapshot information.

Further, the update module 702 is further configured to: in response to the metadata being newly added metadata, update the newly added metadata as a node to the binary search tree; in response to the metadata being modified metadata, determine a first node corresponding to the modified metadata from the binary search tree, and update mapping content of the first node; or in response to the metadata being deleted metadata, determine a second node corresponding to the deleted metadata from the binary search tree, and delete the second node from the binary search tree.

Further, the update module 702 is further configured to: determine a branch direction of the newly added metadata in the binary search tree according to a key value of the newly added metadata, and update the newly added metadata to the binary search tree according to the branch direction.

According to some embodiments of the disclosure, the disclosure also provides an electronic device, a readable storage medium and a computer program product.

FIG. 8 is a block diagram of an example electronic device 800 used to implement some embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 8, the device 800 includes a computing unit 801 performing various appropriate actions and processes according to computer programs stored in a read-only memory (ROM) 802 or computer programs loaded from the storage unit 808 to a random access memory (RAM) 803. In the RAM 803, various programs and data required for the operation of the device 800 are stored. The computing unit 801, the ROM 802, and the RAM 803 are connected to each other through a bus 804. An input/output (I/O) interface 805 is also connected to the bus 804.

Components in the device 800 are connected to the I/O interface 805, including: an inputting unit 806, such as a keyboard, a mouse; an outputting unit 807, such as various types of displays, speakers; a storage unit 808, such as a disk, an optical disk; and a communication unit 809, such as network cards, modems, and wireless communication transceivers. The communication unit 809 allows the device 800 to exchange information/data with other devices through a computer network such as the Internet and/or various telecommunication networks.

The computing unit 801 may be various general-purpose and/or dedicated processing components with processing and computing capabilities. Some examples of computing unit 801 include, but are not limited to, a central processing unit (CPU), a graphics processing unit (GPU), various dedicated AI computing chips, various computing units that run machine learning model algorithms, and a digital signal processor (DSP), and any appropriate processor, controller and microcontroller. The computing unit 801 executes the various methods and processes described above, such as the method for snapshotting metadata. For example, in some embodiments, the method may be implemented as a computer software program, which is tangibly contained in a machine-readable medium, such as the storage unit 808. In some embodiments, part or all of the computer program may be loaded and/or installed on the device 800 via the ROM 802 and/or the communication unit 809. When the computer program is loaded on the RAM 803 and executed by the computing unit 801, one or more steps of the method described above may be executed. Alternatively, in other embodiments, the computing unit 801 may be configured to perform the method in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the disclosure may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections according to one or more wires, portable computer disks, hard disks, random access memories (RAM), read-only memories (ROM), electrically programmable read-only-memory (EPROM), flash memory, fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), the Internet and a block-chain network.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host, which is a host product in a cloud computing service system, in order to solve the existing defects of difficult management and weak business expansion in traditional physical hosting and virtual private server (VPS) services. The server can also be a cloud server, a server of a distributed system, or a server combined with a block-chain.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

In the technical solution of the disclosure, the collection, storage, usage, processing, transmission, provision and disclosure of the user's personal information involved are in compliance with relevant laws and regulations, and do not violate public order and good customs.

The above specific embodiments do not constitute a limitation on the protection scope of the disclosure. Those skilled in the art should understand that various modifications, combinations, subcombinations and substitutions can be made according to design requirements and other factors.

## Claims

1. A method for snapshotting metadata, comprising:
in response to reaching a current snapshot moment, generating (S101) a second basic version number of a binary search tree in a database at the current snapshot moment according to a first basic version number of the binary search tree in the database at a previous snapshot moment;
during a process from the current snapshot moment to a next snapshot moment, whenever metadata in the database is updated, updating (S102) the binary search tree according to the updated metadata, and generating (S102) an updated version number of the binary search tree after each update according to the second basic version number; and
in response to reaching the next snapshot moment, performing (SI03) a snapshot operation on binary search trees corresponding to all version numbers generated between the current snapshot moment and the next snapshot moment to generate snapshot information of the current snapshot moment.

2. The method according to claim 1, wherein generating (S102) the updated version number of the binary search tree after each update according to the second basic version number comprises:
after the metadata is updated each time, acquiring (S301) a current number of updates between the current snapshot moment and the next snapshot moment; and
generating (S302) the updated version number of the binary search tree after each update according to the second basic version number and the current number of updates.

3. The method according to claim 1 or 2, further comprising:
deleting the binary search tree corresponding to the updated version number generated between the current snapshot moment and the next snapshot moment.

4. The method according to any one of claims 1-3, further comprising:
in response to a failure of the database, acquiring (S401) a target version number to which the database needs to be recovered;
searching (S402) target snapshot information that matches the target version number from candidate snapshot information of the database by using the target version number as an index; and
performing (S403) a metadata recovery according to the target snapshot information.

5. The method according to any one of claims 1-4, wherein updating (S102) the binary search tree according to the updated metadata comprises:
in response to the metadata being newly added metadata, updating (S502) the newly added metadata as a node to the binary search tree;
in response to the metadata being modified metadata, determining (S503) a first node corresponding to the modified metadata from the binary search tree, and updating (S503) mapping content of the first node; or
in response to the metadata being deleted metadata, determining (S504) a second node corresponding to the deleted metadata from the binary search tree, and deleting (S504) the second node from the binary search tree.

6. The method according to claim 5, wherein updating (S502) the newly added metadata as the node to the binary search tree comprises:
determining a branch direction of the newly added metadata in the binary search tree according to a key value of the newly added metadata, and updating the newly added metadata to the binary search tree according to the branch direction.

7. An apparatus (700) for snapshotting metadata, comprising:
an acquisition module (701), configured to, in response to reaching a current snapshot moment, generate a second basic version number of a binary search tree in a database at the current snapshot moment according to a first basic version number of the binary search tree in the database at a previous snapshot moment;
an update module (702), configured to, during a process from the current snapshot moment to a next snapshot moment, whenever metadata in the database is updated, update the binary search tree according to the updated metadata, and generate an updated version number of the binary search tree after each update according to the second basic version number; and
an operation module (703), configured to, in response to reaching the next snapshot moment, perform a snapshot operation on binary search trees corresponding to all version numbers generated between the current snapshot moment and the next snapshot moment to generate snapshot information of the current snapshot moment.

8. The apparatus according to claim 7, wherein the update module (702) is further configured to:
after the metadata is updated each time, acquire a current number of updates between the current snapshot moment and the next snapshot moment; and
generate the updated version number of the binary search tree after each update according to the second basic version number and the current number of updates.

9. The apparatus according to claim 7 or 8, wherein the operation module (703) is further configured to:
delete the binary search tree corresponding to the updated version number generated between the current snapshot moment and the next snapshot moment.

10. The apparatus according to any one of claims 7-9, wherein the operation module (703) is further configured to:
in response to a failure of the database, acquire a target version number to which the database needs to be recovered;
search target snapshot information that matches the target version number from candidate snapshot information of the database by using the target version number as an index; and
perform a metadata recovery according to the target snapshot information.

11. The apparatus according to any one of claims 7-10, wherein the update module (702) is further configured to:
in response to the metadata being newly added metadata, update the newly added metadata as a node to the binary search tree;
in response to the metadata being modified metadata, determine a first node corresponding to the modified metadata from the binary search tree, and update mapping content of the first node; or
in response to the metadata being deleted metadata, determine a second node corresponding to the deleted metadata from the binary search tree, and delete the second node from the binary search tree.

12. The apparatus according to claim 11, wherein the update module (702) is further configured to:
determine a branch direction of the newly added metadata in the binary search tree according to a key value of the newly added metadata, and update the newly added metadata to the binary search tree according to the branch direction.

13. An electronic device (800), comprising:
a processor (801); and
a memory (802; 803) communicatively coupled to the processor (801); wherein,
the memory (802; 803) is configured to store instructions executable by the processor (801), and when the instructions are executed by the processor (801), the processor (801) is enabled to perform the method according to any one of claims 1-6.

14. A non-transitory computer-readable storage medium having computer instructions stored thereon, wherein the computer instructions are configured to cause a computer to perform the method according to any one of claims 1-6.

15. A computer program product comprising computer programs, wherein when the computer programs are executed by a processor, the method according to any one of claims 1-6 is performed.
